# EUROPEAN PATENT APPLICATION

(11) **EP 2 383 983 A1**
(43) Date of publication of application: **02.11.2011**
(21) Application number: 11164180.9
(22) Date of filing: 28.04.2011
(51) Int. Cl.: H04N 5/44, H04N 5/63, H04N 5/64, G01S 15/10, G08B 21/18

(54) **Device and method for protecting the eyesight, particularly of a child watching the television**

(30) Priority: 30.04.2010 IT MI20100748
(71) Applicant: Compliance & Inspections Asia Ltd, Tsim Sha Tsui Kowloon Hong Kong (CN)
(72) Inventor: Piras, Pietro Giovanni, 20094 CORSICO (MILANO) (IT); Biacchi, Sergio, 20026 NOVATE MILANESE (MILANO) (IT); Garavaglia, Roberto Reginaldo, 20014 NERVIANO (MILANO) (IT); Quattrocchi, Massimiliano, 20097 SAN DONATO MILANESE (MILANO) (IT)
(74) Representative: Petruzziello, Aldo

(57) **Abstract**

There is described a device (100) for protecting the eyesight, particularly of a child watching the television, comprising a box-type body (10) suitable for being positioned close to a television (200), position sensors (12) housed in the box-type body (10) and suitable for detecting a child staying within a respective operating area, and power supply means (16). The device (100) further comprises receiving means (13), transmitting means (15) and an electronic processing unit (18) in electrical connection with the position sensors (12) and the receiving (13) and transmitting (15) means, housed in the box-type body (10). There is further described a method for protecting the eyesight of a child watching the television carried out by using the above device (100),

## Description

The present invention relates to a device and a method for protecting the eyesight of a child, particularly a school or pre-school age child watching the television.

Despite the motherly admonitions, children tend to watch the television at a close distance from the television screen. This could cause damages to the eyesight. In fact, it is known that the television has to be watched from a distance of at least one meter and that such a distance increases as the size of the television screen increases.

To solve this problem, and thus to preserve the eyesight of a child placed in front of a television, devices have been proposed on the market, which are suitable for detecting the presence of a child in the immediate vicinity of the television and for obscuring the television screen for a time sufficient to allow the child to move away, as he probably is not more attracted by a screen without images.

These known protection devices typically comprise a power supply cable for the electrical connection to a socket, a cable for the connection to the television, for example to a scart socket of the television, and a sensor placed at the television and suitable for detecting the presence of a child staying at a close distance from the television screen.

More particularly, when the child proceeds to a predetermined distance from the television, which is equal to the sensing distance of the sensor, typically of a meter or lower, the sensor detects his presence and controls the obscuration of the television. After a predetermined time, equal to about 12 seconds, elapsed which it is assumed that the child is moved away from the TV screen, the television restarts to operate.

However, the known protection device described above have some drawbacks.

First, as stated above, they have cable for the electrical connection to the television, which, apart from being inconvenient and bulky, cause the device to depend from the constructive characteristics of the television to which the device is associated, such as, for example, model, type, and function of the electrical connection socket which are used and/or provided.

Secondly, the known devices are not suitable for distinguishing between a child staying at a short distance from the television screen and, for example, another person, animal or object passing accidentally before the television. As a consequence, the device is turned on, thus obscuring the screen, for example, also when the mummy travels before the television. This causes unnecessary operations of the device, with the subsequent increased consumption of energy and the reduction of the work life thereof.

US 4 417 278 A discloses a proximity detection system mounted in combination with a TV receiver adapted to disrupt the programs of the receiver at the times when objects of at least the dimensions of children are positioned within a designated distance from the television picture.

JP 7 236097 A discloses a picture eliminating device which eliminates the TV screen corresponding to the condition of viewing the TV screen. The device comprises detection means for detecting the entry of a viewer in the prescribed area close to the TV screen and power supply cut means for cutting the TV power supply when the remaining time in the prescribed area reaches the prescribed short time set in advance.

JP 2006 186793 A discloses a television device comprising a display unit for displaying images of a program on a screen and control units for controlling display operation of the screen. The television device is provided with detection means for detecting a person who approaches to the screen within a distance established beforehand, and sending out a detected signal. The control units controls the display unit to make the screen non-display, based on the detected signal.

These known devices, although are suitable for distinguishing between a child staying at a short distance from the television screen and, for example, another person, animal or object passing accidentally before the television, have the above mentioned drawback related to the presence of inconvenient and bulky cables for the electrical connection to the television.

CA 2 453 696 A1 discloses an apparatus for controlling a television receiver in response to proximity of a person for preventing children from sitting too close to a television screen. The device comprises a base unit on the television receiver and a slave unit remote from the television receiver. The base unit has a proximity detector that senses whether the child is within a preset range forward of the television receiver and, in response to a range violation, transmits a triggering signal on a RF carrier to the slave unit. In turn, the slave unit transmits an OFF command to an infrared sensor built into the television receiver.

This known solution has the following drawbacks. In order to avoid interference with normal operation of the television receiver, the RF carrier used to transmit triggering signals has to be distinct from the infrared carrier that carries command. Moreover, the slave has to be suitably positioned to ensure adequate line of eyesight transmission communication with the television receiver via the infrared carrier.

The main object of the present invention is, thus, to eliminate, or at least reduce, the drawbacks above mentioned with reference to the eyesight protection devices of the prior art, by providing a protection device without cables for the electrical connection to the television and thus suitable for being applied to any kind of television available on the market.

Another object of the present invention is to provide an eyesight protection device adapted to deactivate the television in the event of effective presence of a child at a close range from the screen.

Still another object of the present invention is to provide an eyesight protection device which can be easily used and produced to competitive manufacturing costs.

A further object of the present invention is to provide a method of protecting the eyesight, particularly of a child, which is carried out by using the above protection device.

These and other objects, which will better appear in the following, are obtained according to the features listed in the appended independent claims 1 and 10. According to a first aspect of the present invention, there is provided a device for protecting the eyesight, particularly of a child watching the television, comprising a box-type body suitable for being positioned close to a television, at least one position sensor housed in the box-type body and suitable for detecting a child staying within a respective operating area, power supply means and receiving means, transmitting means and at least one electronic processing unit housed in the box-type body, the electronic processing unit being in electrical connection with the at least one position sensor and the receiving and transmitting means.

The device is characterized in that the receiving means is an infrared receiver suitable for receiving an ON/OFF code of the television transmitted by a remote control of the television and for storing it in the electronic processing unit and the transmitting means is an infrared transmitter suitable for transmitting the ON/OFF code to the television in order to turn off the television when the at least one position sensor detects a child staying within its operating area and turn on back the television when the sensor detects the child is moved away of the operating area thereof,

Preferably, the at least one position sensor is an ultrasonic sensor.

Preferably, the protection device further comprises a function selection button, by means of which the user can set operating parameters of the device, such as, for example, sensing distance of the sensors based on the child stay time in front of the screen, which are selected within suitable ranges.

According to a further aspect of the present invention, there is provided a method of protecting the eyesight, particularly of a child watching the television, which is carried out by using the protection device of the invention, the method comprising the steps of:
- placing the protection device close to a television;
- storing the ON/OFF code of the television in the electronic processing unit;
- setting the sensing distance Dᵢₙₜ of the at least one sensor of the protection device;
- detecting through the at least one sensor a child staying at a close distance from the television screen (D≤Dᵢₙₜ);
- transmitting the ON/OFF code previously stored in the electronic processing unit, thereby turning-off the television;
- detecting that the child is moved away of the television screen (D>Dᵢₙₜ); and
- transmitting the ON/OFF code previously stored in the electronic processing unit, thereby turning-on back the television.

Other advantageous characteristics of the invention form the subject matter of the dependent claims.

The invention will now be described with reference to a purely exemplifying and therefore non-limiting embodiment thereof, illustrated in the appended figures, wherein:
Figure 1 is a perspective view of a eyesight protection device according to the invention coupled to a conventional television;
Figure 2 is a block diagram, illustrating in detail the components of the device of Figure 1; and
Figure 3 is a flow chart showing the various steps of the method of protecting the eyesight according to the invention.

In the appended drawings same or similar parts or components are designated with the same reference numerals.

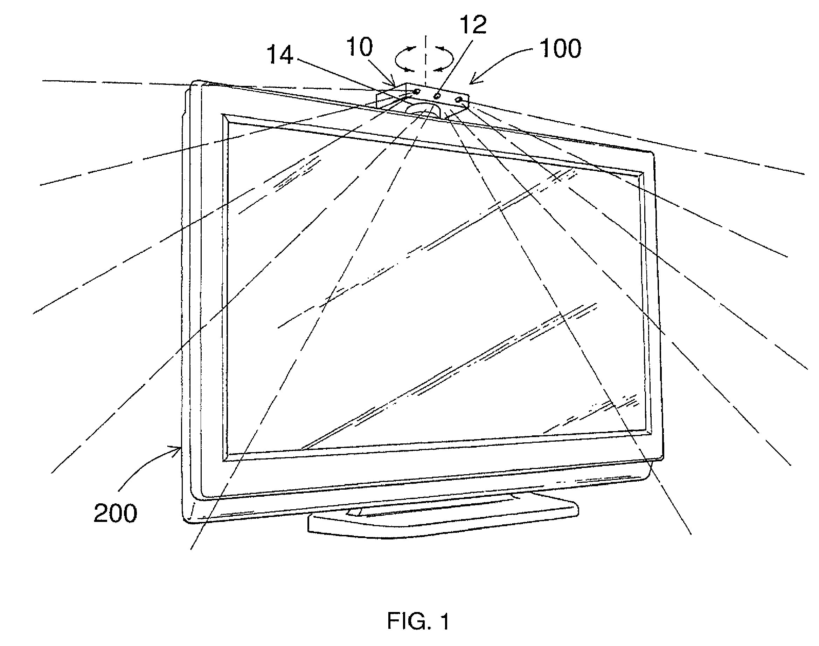

With reference to Figure 1, a device for protecting the eyesight of a child watching the television is designated, in general, with the reference numeral 100.

The device 100 is suitable for being placed close to a television 200, which can be of any type, whereby it will not be further described in the present document.

Preferably, the device 100 has a box-type body 10 provided with at least one sensor 12, in the example three sensors 12, and mounted on a support 14, permitting it to be vertically oriented.

Preferably, the support 14 is fixed in the upper portion of the television 200, for example by means of adhesive material, and the box-type body 10 can, thus, vertically rotate thereby orienting the sensors 12 in the direction of the area to be supervised, also called operating area.

Preferably, sensors 12 are ultrasonic sensors, having, for example, an emission and transmission frequency of 40 kHz. They are suitably spaced each other thereby covering an operating area having a roominess of about 180°, in order to guarantee the functionality of the device independently of the viewer's position with respect to the television 200.

In the following of the present specification, the expressions operating area and sensing distance of a sensor are deemed to indicate, respectively, the area and the distance inside which the ultrasonic signal produced by the sensor can propagate.

The used ultrasonic sensors 12 can be of a simple type (separated transmitter and receiver) or of a dual type (unified transmitter and receiver). Moreover, during transmission, the ultrasonic sensors 12 can operate simultaneously or singularly, in a sequential way.

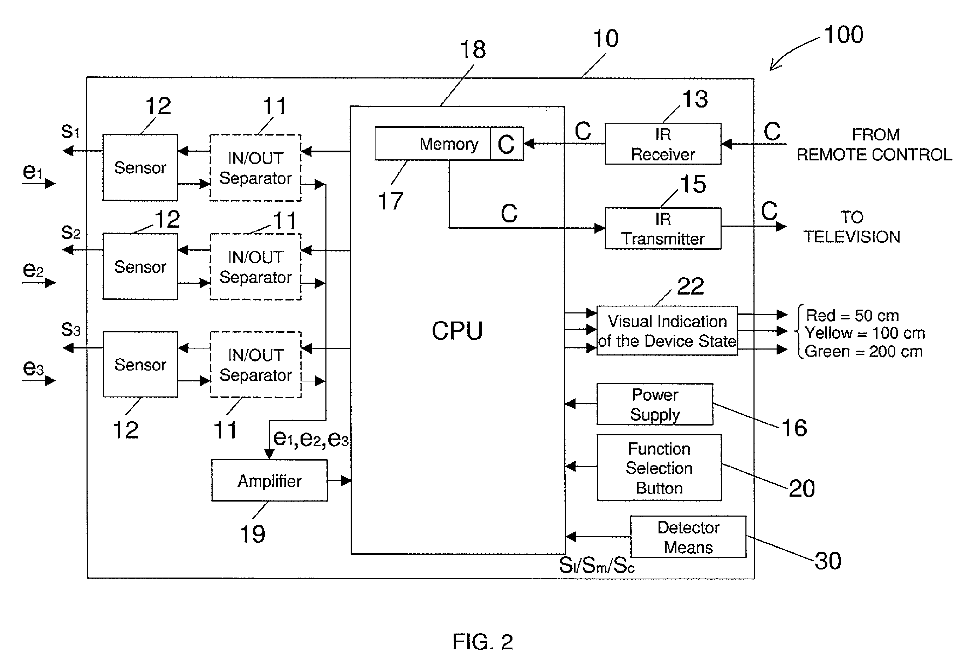

In this latter case, and with particular reference to Figure 2, upstream to each sensor 12 there are provided separator means 11 of echo signals e₁, e₂, e₃ generated by the reflection of the ultrasonic signals s₁, s₂, s₃ produced by each sensor 12, the reflection being caused by a child present within the sensing area of the sensors 12.

Moreover, in order to reduce consumptions, sensors 12 have a very short operating period, equal to about 1 msec, with a repetition every 2-3 sec.

Naturally, although in the described and illustrated embodiment mention has been made to ultrasonic sensors, any other kind of sensor known and suitable to the end falls into the scope of the invention.

As illustrated in greater detail in Figure 2, the device 100 comprises, together with the at least one sensor 12, power supply means 16, at least one electronic processing unit or CPU 18, receiving means 13 and transmitting means 15, all housed in the box-type body 10.

The device 100 further comprises an amplifier 19, suitable for amplify the echo signals e₁, e₂, e₃ coming, simultaneously or in sequence, from the sensors 12 and for transmitting them to the CPU 18.

Preferably, the power supply means 16 consist of one or more batteries, more preferably rechargeable batteries, Alternatively, or in addition, the device 100 can be supplied by an external power supply through a DC plug,

Preferably, the receiving means comprise an infrared receiver 13 and the transmitting means 15 comprise an infrared transmitter 15.

In particular, the infrared receiver 13 is suitable for receiving a signal C containing the ON/OFF code of the television 200 transmitted to the device 100 by means of a traditional remote control (not shown) for remote controlling the television 200. The signal C is, subsequently, stored in a memory 17 of the CPU 18.

The protection device 100 further comprises a function selection button 20, preferably placed in the rear portion of the box-type body 10, and visual indicator means 22 of the state of the protection device 100, for example a plurality of LED of different colours, preferably red, yellow and green, or blinking at different frequencies, preferably placed in the front portion of the box-type body 10.

Preferably, the function selection button 20 does not project from the box-type body 10 and can be operated only with the help of a pen and/or a pencil. This avoid it to be operated by a child,

In particular, by means of the function selection button 20, the user can set a series of operating parameters of the protection device 100. These operating parameters preferably comprise:
- the ON/OFF code C of the television 200;
- the sensing distance Dᵢₙₜ of sensors 12; and
- the maximum stay time Tₘₐₓ of a child at the sensing distance Dᵢₙₜ of the sensors 12.

Preferably, the time Tₘₐₓ can be selected in a range preferably varying between 4 sec. and 8 sec.

Instead of to selected by the user by means of the function selection button 20, the time Tₘₐₓ can be set on a fixed value, preferably equal to about 5 seconds, upon manufacturing the protection device 100.

Preferably, the sensing distance Dᵢₙₜ of the sensors 12 can be selected in a range preferably varying between 50 cm and 200 cm.

A situation can further happen in which the television 200 is off whereas the protection device 100 is on. In this case, if the device 100 detects the presence of a child within the sensing area of the sensors 12 and for the determined time, it transmits to the television 200 the ON/OFF code C. As a consequence, the television 200 is turned on and, obviously, this is undesirable.

In order to solve this drawback, advantageously, the device 100 of the invention is provided with means 30 for detecting the state of the television 200, destined to detect if the television 200 is on or off. These detector means 30 are housed in the container body 10 and are electrically connected to the CPU 18. The detector means 30 are not electrically connected to the television and thus results in the absence of inconvenient and bulky cables for the electrical connection between the device 100 and the television 200.

Preferably, these detector means 30 of the state of the television 200 consist of a brightness detector, destined to detect the brightness of the screen S and to transmit a correspondent signal s₁ to the CPU 18. In alternative, or in addition, the detector means 30 of the state of the television 200 consist of a magnetic field sensor, suitable for inductively detecting the magnetic field produced by the television 200 during turning on and for transmitting a corresponding signal sₘ to the CPU 18.

According to a further embodiment, the detector means 30 of the state of the television 200 consist of a current detector designed to detect the current flowing on the power supply cable of the television 200 and to transmit a corresponding signal s_{c} to the CPU 18. In this case, instead of in the container body 10, the current detector 30 is placed close to the power supply cable of the television 200.

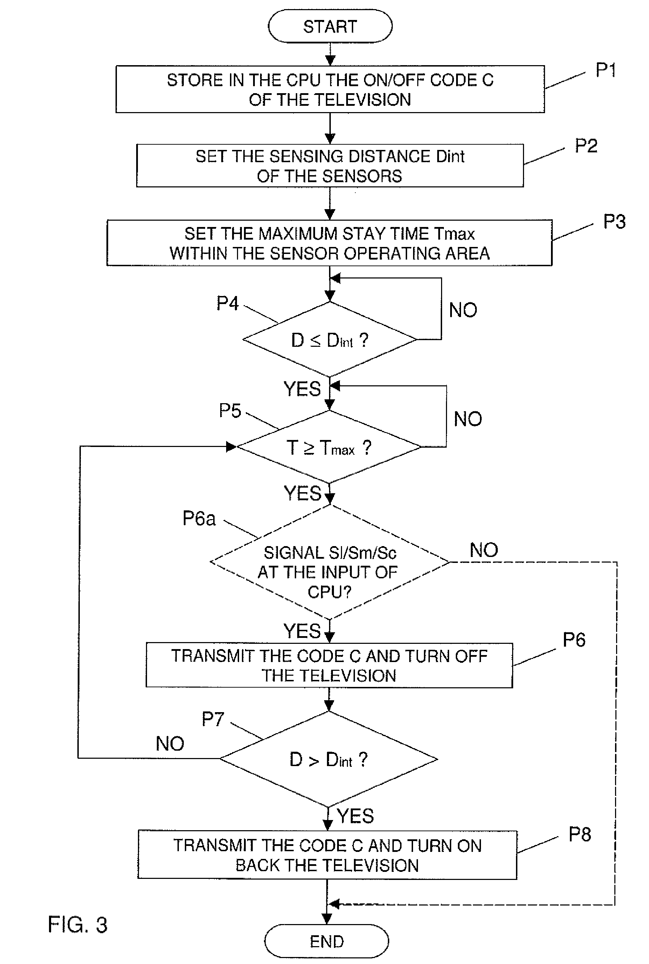

With reference to the flow chart shown in Figure 3, it is now described the operation of the protection device 100 according to the invention.

First, the user stores the ON/OFF code C of the television 200 in the memory 17 of the electronic processing unit 18 (step P1).

To this end, he presses the function selection button 20 up to the switching on, for example, of the red LED. Then, he directs the remote control to the device 100 and, by pressing the function selection button 20, presses the stand-by key of the remote control. The ON/OFF code C of the television 200 transmitted by the remote control is received by the infrared receiver 13 of the device 100 and stored in the memory 17 of the CPU 18, At the end of the storing operation of the code C, the red LED is switched off and the green LED is switched on.

Subsequently, the user sets the sensing distance Dᵢₙₜ of the sensors 12 (step P2) and, if provided, the maximum stay time Tₘₐₓ in the operating area of the sensors (step P3).

To this end, he briefly presses the function selection button 20. A different distance corresponds to every brief pressure of the button 20 and a LED having a different colour corresponds to every distance, for example red for a sensing distance Dᵢₙₜ of 50 cm, yellow for a sensing distance Dᵢₙₜ of 100 cm, and green for a sensing distance Dᵢₙₜ of 200 cm.

A completely similar method is carried out to set the time Tₘₐₓ, if this possibility is provided.

It is assumed, at this point, that a child comes too close to the screen S of the television 100, for example, at a distance D lower than or equal to the set sensing distance Dᵢₙₜ, for example 50 cm (step P4), for a time T greater than or equal to the time Tₘₐₓ predetermined or set by the user, for example 5 seconds (step P5).

Sensors 12 detect the presence of the child in the respective operating area and generate a respective echo signal e₁, e₂, e₃, as described above, by the reflection of the corresponding ultrasonic signal s₁, s₂, s₃, transmitted by each sensor 12.

The echo signals e₁, e₂, e₃ are, then, transmitted, simultaneously or in sequence, to the amplifier 19, which in turn transmits them to the CPU 18.

The CPU 18 transmits, then, to the television 200, through the infrared transmitter 15, the ON/OFF code C previously stored in the memory 17, with the consequent turn-off of the television 200 (step P6).

It is now assumed that the child, which is not more attracted by a dark screen S, comes away of the television 200, thus bringing to a distance D greater than the sensing distance Dᵢₙₜ of the sensors 12, thus coming away of the operating area of the sensors (step P7).

Sensors 12 do not more detect the presence of the child, and thus the CPU 18 does not more receive the echo signals e₁, e₂, e₃ and, as a consequence, it transmits to the television 200, by means of the infrared transmitter 15, the ON/OFF code C previously stored in the memory 17. As a consequence, the television 200 is turned-on back (step P8).

It is now assumed that the television is off and the protection device 100 has been left on by accident. In this case, the method provides, downstream to the step of detecting the presence of a child at a close distance from the screen (step P4) for a predetermined time (step P5), and upstream to the step P6 of transmitting the ON/OFF code C of the television 200, a further step P6a suitable for detecting if the television is on or off. This further step consists of verifying the presence, at the input of the CPU 18, of the signals s₁, sₘ or s_{c} produced by the detector means 30.

In particular, the ON/OFF code C of the television is transmitted only if the presence of the signals s₁, sₘ or s_{c} is detected, which indicates that the television is on, with the consequent turning off of the television. This advantageously avoids undesired turnings on of the television, thus allowing an energy saving.

From the above, it is easily understood that the protection device 100 of the invention advantageously results free from electrical connection cables and totally independent from the particular kind of television to which it is coupled. In fact, if it is desired to couple the device 100 to a different television, it will be sufficient to simply store in the memory 17 of the CPU 18 the ON/OFF code C of the new television.

Moreover, the device calculates, or, if provided, allows the user to set a maximum stay time Tₘₐₓ before the television and this advantageously allows the television to be turned-off in the event of a real presence of a child at a close distance from the screen, thus avoiding unnecessary operations of the device and increasing the work life thereof.

Without departing from the scope of the invention exposed in the appended claims, a person skilled in the art can make to the embodiment of the invention above described numerous modifications and variations.

## Claims

1. A device (100) for protecting the eyesight, particularly of a child watching the television, comprising a box-type body (10) suitable for being positioned close to a television (200), at least one position sensor (12) housed in the box-type body (10) and suitable for detecting a child staying within a respective operating area, power supply means (16) and receiving means (13), transmitting means (15) and at least one electronic processing unit (18) housed in the box-type body (10), said electronic processing unit (18) being in electrical connection with said at least one position sensor (12) and said receiving (13) and transmitting (15) means,
**characterized in that** said receiving means is an infrared receiver (13) suitable for receiving an ON/OFF code (C) of the television transmitted by a remote control of the television (200) and for storing it in said electronic processing unit (18) and said transmitting means is an infrared transmitter (15) suitable for transmitting said ON/OFF code (C) to the television (200) in order to turn off the television (200) when said at least one position sensor (12) detects a child staying within its operating area, and to turn on back the television (200) when the sensor (12) detects the child is come away of the operating area thereof.

2. A device (100) according to claim 1, **characterized in that** said at least one position sensor (12) is an ultrasonic sensor suitably for transmitting an ultrasonic signal (s₁, s₂, s₃) and for generating an echo signal (e₁, e₂, e₃) to be transmitted to said electronic processing unit (17).

3. A device (100) according to claim 1 or 2, **characterized in that** said ON/OFF code (C) of the television (200) is stored in a memory (17) of said electronic processing unit (18).

4. A device (100) according to any one of the preceding claims, **characterized in that** said power supply means (16) comprise at least one battery.

5. A device (100) according to any one of the preceding claims, **characterized in that** it further comprises a function selection button (20) placed rearwardly to said box-type body (10) and suitable for allowing a user to set a series of operating parameters of the device (100), and visual indicator means (22) of the state of the device (100).

6. A device (100) according to claim 5, **characterized in that** said operating parameters comprise a sensing distance (Dᵢₙₜ) of said position sensors (12) and a maximum stay time (Tₘₐₓ) of a child at said sensing distance (Dᵢₙₜ) of said position sensors (12).

7. A device (100) according to claim 6, **characterized in that** said maximum stay time (Tₘₐₓ) can be selected by the user within a range varying from 4 sec to 8 sec.

8. A device (100) according to claim 6 or 7, **characterized in that** said sensing distance (Dᵢₙₜ) can be selected by the user within a range varying from 50 cm to 200 cm.

9. A device (100) according to any one of claims 5 to 7, **characterized in that** said visual indicator means (22) of the state of the device (100) comprise at least one LED.

10. A device (100) according to any one of the preceding claims, **characterized in that** it further comprises means (30) for detecting the state of the television (200) which are electrically connected to said electronic processing unit (18), said detector means (30) being suitable for detecting if the television (200) is on or off.

11. A device (100) according to claim 10, **characterized in that** said detector means (30) consist of a brightness sensor, a magnetic field sensor or a current detector, which can operate singularly or in combination.

12. A method for protecting the eyesight, particularly of a child watching the television carried out by using the device (100) according to any one of the claims 1 to 9, the method comprising the steps of:
- placing the device (100) close to a television (200);
- storing (step P1) the ON/OFF code (C) of the television (200) in the electronic processing unit (18);
- setting (step P2) the sensing distance (Dᵢₙₜ) of the at least one position sensor (12);
- detecting (step P4) through the at least one position sensor (12) a child staying at a close distance (D) from the television screen (S) (D ≤ Dᵢₙₜ) for a predetermined time (Tₘₐₓ);
- transmitting (step P6) the ON/OFF code (C) previously stored in the electronic processing unit (18), thereby turning-off the television (200);
- detecting (step P7) that the child is moved away from the television screen (S) (D > Dᵢₙₜ); and
- transmitting (step P8) the ON/OFF code (C) previously stored in the electronic processing unit (18), thereby turning-on back the television (200).

13. A method according to claim 12, **characterized in that** said step (step P1) of storing the ON/OFF code (C) of the television (200) in the electronic processing unit (18) comprises the steps of:
- transmitting the ON/OFF code (C) of the television (200) to the infrared receiver (13) by pressing the stand-by button of the remote control of the television (200); and
- storing the code (C) in the memory (17) of the electronic processing unit (18).

14. A method according to claim 12 or 13, **characterized in that** it comprises, upstream to the step (step P4) of detecting a child staying at a close distance from the screen (S), a further step of setting (step P3) the maximum stay time (Tₘₐₓ) of a child at said close distance from the screen (S).

15. A method according to any one of claims 12 to 14, **characterized in that** it comprises, between the step of detecting (step P4) through the at least one position sensor (12) a child staying at a close distance (D) from the television screen (S) (D ≤ Dᵢₙₜ) for a predetermined time (Tₘₐₓ) and the step of transmitting (step P6) the ON/OFF code (C) previously stored in the electronic processing unit (18), thereby turning-off the television (200) a further step (step P6a) of detecting the presence/absence at the input of the electronic processing unit (18) of at least a signal (s₁; sₘ; s_{c}) suitable for determining the state of turning on/turning off of the television (200), the ON/OFF code (C) of the television (200) being transmitted (step P6) only if said at least a signal (s₁; sₘ; s_{c}) is present.
